# EUROPEAN PATENT SPECIFICATION

(11) **EP 3 963 181 B1**
(45) Date of publication and mention of the grant of the patent: **01.01.2025**
(21) Application number: 20798295.0
(22) Date of filing: 01.05.2020
(51) Int. Cl.: E21B 47/04, E21B 47/06, E21B 47/01, E21B 47/00

(54) **A SYSTEM, METHOD AND DEVICE FOR DETERMINING CONDITIONS OF A BOREHOLE**
SYSTEM, VERFAHREN UND VORRICHTUNG ZUR BESTIMMUNG VON BOHRLOCHBEDINGUNGEN
SYSTÈME, PROCÉDÉ ET DISPOSITIF DE DÉTERMINATION DE CONDITIONS D'UN TROU DE FORAGE

(30) Priority: 01.05.2019 AU 2019901473
(43) Date of publication of application: 09.03.2022
(73) Proprietor: The University of Queensland, St Lucia, Queensland 4072 (AU)
(72) Inventor: POUNDS, Pauline, St Lucia, Queensland 4072 (AU); DEER, William Andrew, Waterford, Queensland 4133 (AU); LEY, David John, Waiau Pa, 2679 (NZ); MILNE, John DeCourcey, Taringa, Queensland 4068 (AU); ONEDERRA, Italo Andres, Karana Downs, Queensland 4306 (AU)
(74) Representative: Barker Brettell LLP
(86) International application number: PCT/AU2020/050431
(87) International publication number: WO 2020/220087

(56) References cited:
- WO-A1-2015/020647
- WO-A1-2016/148880
- WO-A1-2016/176643
- WO-A1-2016/176643
- WO-A1-2017/027447
- US-A- 6 138 509
- US-A1- 2004 206 492
- US-A1- 2018 245 462
- US-B2- 8 286 483

## Description

### FIELD OF THE INVENTION

The present invention relates to a device for determining conditions of a borehole. In particular, although not exclusively, the invention relates to a device for logging the depth of a borehole and determining the presence or absence of water therein prior to explosives being loaded into that borehole.

### BACKGROUND TO THE INVENTION

Reference to background art herein is not to be construed as an admission that such art constitutes common general knowledge in Australia or elsewhere.

Drilling and blasting is the controlled use of explosives to break rock for excavation. It is practised most often in mining, quarrying and civil engineering applications such as dam and road construction.

Typically, a drill crew will undertake a campaign of drilling the blast holes to a predetermined depth and in a predetermined pattern. The depth of each hole and the blast hole pattern is designed with particular care by the drill and blast engineering team to obtain the desired excavation of ground.

After the drill crew has completed its campaign the blast crew then load each hole with explosives. It is extremely important that the correct amount of explosives are loaded into each hole. Poor outcomes in drill and blast operations can lead to significant additional excavation costs due to poor fragmentation of the ground after blast.

However, despite due care by the drilling crew there is a divergence from the desired hole depth of each blast hole and also a divergence from the location of each hole from the plan developed by the drill and blast engineering team. Furthermore, some drilling patterns may consist of several holes that could take days or weeks to be logged and charged with explosives. During this time, the borehole is exposed to the elements and may be partially filled with water.

Furthermore, cave ins can occur in the borehole thus reducing the effective depth of the borehole for the purpose of blasting.

These variations need to be accounted for when selecting the amount of explosives to be loaded in each hole. As such, prior to the explosives being loaded into the hole a process referred to as hole dipping occurs. Traditionally, this process has involved a member of the blast crew dropping a tape measure or a line with a weight at the end of it to determine the actual depth of the borehole and also to assess for the presence of water as well as the depth of the water when water is present.

That process is conducted manually for each hole and the results are then passed to the blast engineer. The blast engineer then calculates the amount of explosives to load into each hole in order to achieve the desired blast effect.

This process is very time consuming, subject to error and involves a large amount of manual effort from mine site personnel.

WO 2016/176643 A1 discloses a communication system comprising: a first transmitter that is acoustically coupled to a column of fluid located within a wellbore of an oil, gas, or water well, wherein the first transmitter transmits sound waves wirelessly through the column of fluid located within the wellbore, and wherein the sound waves are encoded with data; and a first receiver that is acoustically coupled to the column of fluid located within the wellbore, wherein the first receiver receives the data-encoded sound waves, wherein the data-encoded sound waves communicate information about the well or a component of the wellbore.

WO 2015/020647 A1 discloses a method and device for obtaining measurements of downhole properties in a subterranean well, in which an untethered apparatus includes a housing and one or more sensors configured to measure data along the subterranean well, the data including one or more physical, chemical, geological or structural properties in the subterranean well.

### OBJECT OF THE INVENTION

It is an aim of this invention to provide a device, method and/or system which overcomes or ameliorates one or more of the disadvantages or problems described above, or which at least provides a useful alternative.

### SUMMARY OF THE INVENTION

In accordance with the invention, there is provided a borehole sensing device as defined by the appended claims.

Further features and advantages of the present invention will become apparent from the following detailed description.

### BRIEF DESCRIPTION OF THE DRAWINGS

By way of example only, preferred embodiments of the invention will be described more fully hereinafter with reference to the accompanying figures.
FIG. 1 shows a schematic view of a system for determining borehole conditions according to an embodiment of the invention.
FIG. 2A shows a perspective view of an embodiment of a borehole sensing device shown in schematic in FIG1 as part of the system for determining borehole conditions.
FIG. 2B shows a side view of the borehole sensing device shown in FIG 2A.
FIG. 2C shows a top view of the borehole sensing device shown in FIG. 2A.
FIG 2D shows a bottom view of the borehole sensing device shown in FIG. 2A.
FIG 2E shows an exploded perspective view of the bore hole sensing devices shown in FIG 2A.
FIGS 3A to 3E show the borehole sensing device shown in FIG 2A in use with an embodiment of a receiving device shown in schematic in FIG 1.
FIG 4 shows a perspective view of a further embodiment of a receiving device shown in schematic in FIG1 as part of the system for determining borehole conditions.
FIG 5A shows a perspective view of a further embodiment of a borehole sensing device shown in schematic in FIG1 as part of the system for determining borehole conditions.
FIG 5B shows a sectional side view of the borehole sensing device shown in FIG 5A.
FIG 6A shows a perspective view of still a further embodiment of a borehole sensing device shown in schematic in FIG1 as part of the system for determining borehole conditions.
FIG 6B shows a sectional side view of the borehole sensing device shown in FIG 6A.
FIG 7A shows a perspective view of a repeater device located on amplification member forming part of a further embodiment of the system for determining borehole conditions.
FIG 7B shows partial sectional view the repeater device and the amplification member shown in FIG 7A.

### DETAILED DESCRIPTION OF THE DRAWINGS

Elements of the invention are illustrated in concise outline form in the drawings, showing only those specific details that are necessary to understanding the embodiments of the present invention, but so as not to clutter the disclosure with excessive detail that will be obvious to those of ordinary skill in the art in light of the present description.

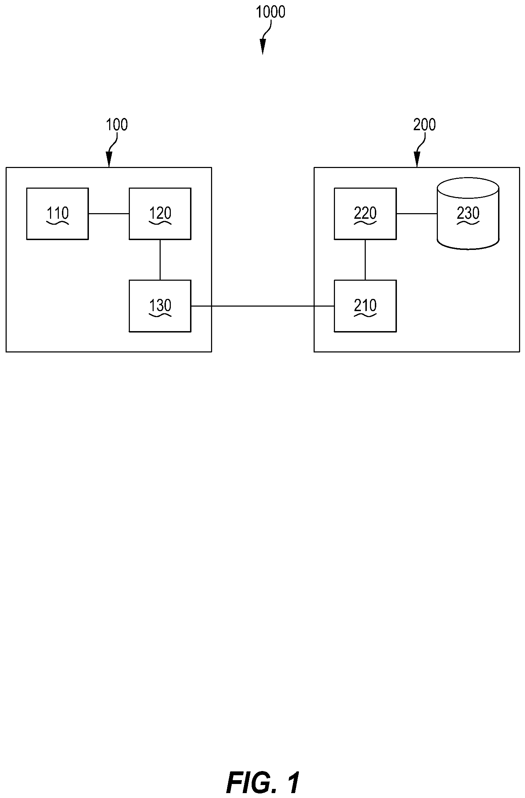

Figure 1 shows a schematic view of a system for determining borehole conditions 1000 according to an embodiment of the invention. Also show in Figure 1 is a schematic view of a borehole sensing device 100 and a receiving device 200 forming part of system 1000.

Borehole sensing device 100 is adapted to be deployed within a borehole and has a sensing module 110, a processing module 120 and a communications module 130. Borehole sensing device 100 may be deployed within a borehole by being dropped into the borehole by a person, by a UAV or other similar deployment methods.

Sensing module 110 is adapted to sense conditions of the borehole which, in a preferred embodiment, is used to calculate the absolute depth of the borehole, the presence or absence of moisture and/or water within the borehole and the depth of water from the bottom of the borehole. Other conditions may optionally include temperature of the bore hole and the like.

In a preferred form, the sensing module 110 includes a pressure sensor configured to determine the depth of the borehole by determining the pressure differential between the top of the borehole and the surface of water in the borehole to thereby determine the distance between those two points.

Furthermore, in a preferred form, the borehole sensing device 100 is adapted to sink in the water of the borehole. As such, the sensing device is also able to determine the pressure differential between the surface of the water and the bottom of the borehole to thereby calculate the depth of the water and also the absolute depth of the borehole.

A skilled addressee will appreciate that the three pressure readings taken: at the mouth of the hole, at the bottom of the hole under a body of water, if any, and at the top of the body of water, can be used to calculate the absolute depth of the borehole and also the height of the column of water by using well known relative pressure differential equations to calculate that data.

In a preferred form, the sensing module 110 is in the form of a bathymetry sensor as is known in the art. The sensing module 110 may also include temperature sensors, moisture sensors and other such sensors to determine conditions of the borehole.

Processing module 120 is adapted to receive data associated with the conditions of the borehole from the sensing module 110 and communicate that data to communications module 130. Communications module 130 is adapted to communicate data associated with conditions of the borehole out of the borehole.

In the embodiment, this communication takes the form of an audio transmission that has a protocol for communicating the data associated with conditions of the borehole. As such, in the embodiment, communications module 130 takes the form of a speaker. Other communication forms may be used such as radio waves, optical signals or the like. In a preferred form the communications module 130 communicates the data associated with the conditions of the borehole continuously in a looped data sequence. Suitably, that data includes a unique borehole identifier.

In some embodiments of the invention, communications module 130 may provide for two way communications such that the data associated with conditions of the borehole is communicated from communications module 130 in response to receiving a request message to do so.

Preferred embodiments of the sensing device 100 will be described in greater detail below.

Receiving device 200 is located distal from the borehole sensing device. Preferably, the receiving device 200 is located out of the borehole and includes a receiving module 210 a processing module 220 and a data store 230. Receiving module 210 is adapted to receive the data associated with the conditions of the borehole transmitted by the communications module 130 of the borehole sensing device 100. In the embodiment, receiving module 210 takes the form of an audio receiver such as a microphone or the like.

The processing module processes the data received from the receiving module and stores that data in data store 230. Optionally, data store 230 may be located remote from the receiving device 200.

Receiving device 200 may take the form of a handheld unit operable by a person, a station on the ground, a ground vehicle or an unmanned aerial vehicle (UAV) or the like or be deployed in such a device. Alternatively, the receiving device 200 may be located at a central location remote from the borehole and the borehole sensing device 100. In all embodiments, the receiving device 200 is located out of the borehole whilst, in use, the borehole sensing device is located within the borehole.

Preferred embodiments of receiving device 200 will be discussed in greater detail below.

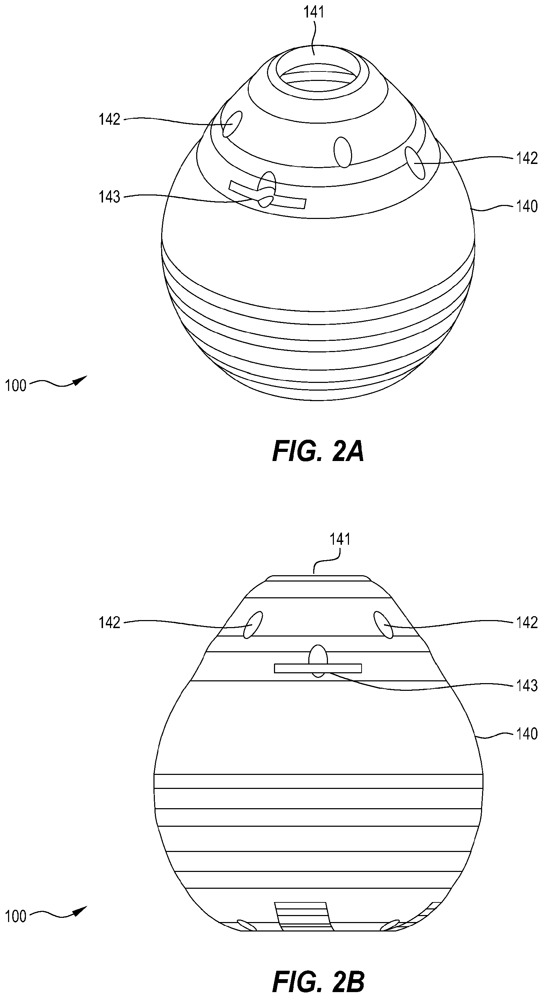

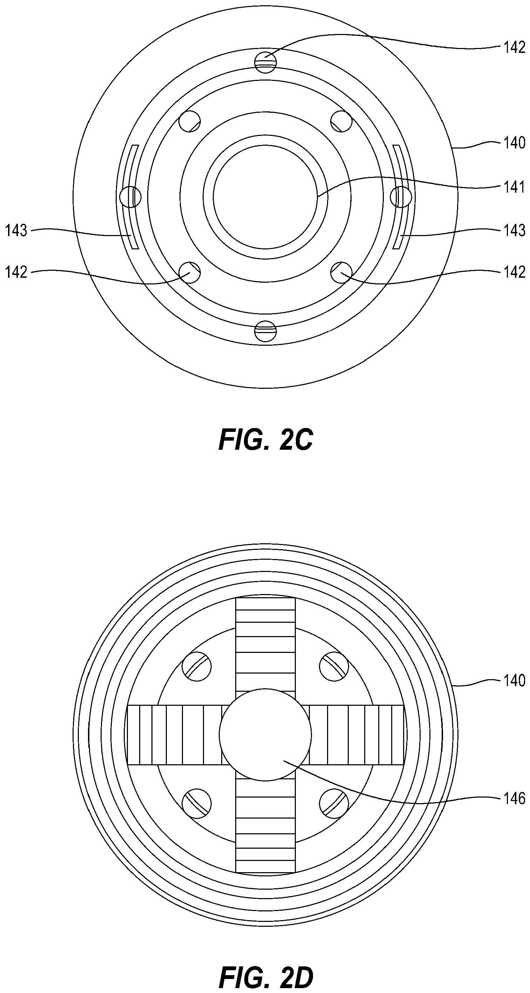

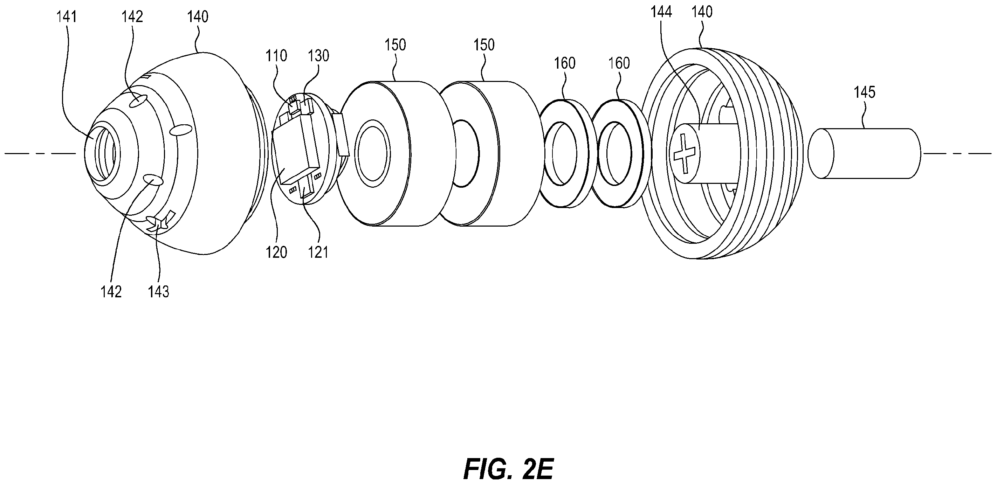

FIG 2A shows a perspective view of an embodiment of the borehole sensing device 100 shown in schematic as part of the system for determining borehole conditions 1000 shown in FIG 1. FIG. 2B shows a side view of the borehole sensing device 100, FIG. 2C shows a top view of the borehole sensing device 100, FIG 2D shows a bottom view of the borehole sensing device 100 and FIG 2E shows an exploded perspective view of the bore hole sensing device 100.

Borehole sensing device 100 has a casing 140. Casing 140 has a Gömböc shaped exterior in this embodiment of the borehole sensing device 100. This shape allows the borehole sensing device 100 to remain in a preferred orientation during its deployment in the borehole and passage down the borehole as will be described in further detail below. Suitably, the shape of the casing may be any monostatic polytope geometry.

Casing 140 has a hollow interior. A communications aperture 141 extending from an outer side of casing 140 into hollow cavity. Casing 140 also has a number of fluid ingress apertures 142 extending from an outside of casing 140 to within hollow cavity to allow the ingress of water to or egress of gas from within the hollow cavity in circumstances when the borehole sensing device 100 is deployed within the borehole and water is present in the borehole.

Borehole sensing device 100 also has a power ignition device 143 in the form of an aperture extending through the casing 140 in the hollow interior and a tab that is operable upon extraction through the aperture to provide power to the borehole sensing device 100 as will be discussed in greater detail below.

Power ignition device 143 may take the form of a switch or other like power ignition mechanisms in certain embodiments of the invention.

A blind bore 144 is located at an end of borehole sensing device 100 distal to the communications aperture 141. Blind bore 144 extends within casing 141 as shown and has located therein a ballast member 145. Optionally, blind bore 144 may also include apertures extending therethrough in hollow cavity to allow ingress of water and egress of gas.

A cap 146 releasably retains ballast member 145 within blind bore 144. Cap 146 is formed from a material such as citric acid, bicarbonate soda, sugar or the like or combinations thereof that is dissolvable in fluid at a predictable rate. Alternatively, cap may be secured to casing by a binding agent that is dissolvable in a fluid. A skilled addressee will appreciate that vents and the like may be included around the casing proximal the cap so as to better allow water to access the cap.

In the event that cap 146 dissolves as a result of the presence of fluid, such as water, ballast member 145 is free to move out of blind bore 144 as will be discussed in greater detail below.

Sensing module 110, processing module 120 and communications module 130 are located within hollow cavity of casing 140 of borehole sensing device 100. These components have functions as previously described.

Power module 121 is also located within housing 140 to provide power to sensing module 110, processing module 120 and communications module 130. Power module 121 is operable by way of power ignition device 143.

Floatation members 150 are located within hollow cavity of casing 140 of borehole sensing device 100. Floatation members 150 are selected to have a buoyancy force that is less than the sinking force provided by the ballast member 145 such that when ballast member 145 is located within blind bore 145, the borehole sensing device 100 sinks within a fluid. Furthermore, the buoyancy force provided by floatation members 150 is of sufficient force such that when ballast member 145 exits blind bore 144 after cap 146 has dissolved in fluid the buoyancy force provided by flotation members 150 is such that borehole sensing device 100 floats to the surface of the fluid.

Whilst two floatation members 150 are shown in the embodiment described, it will be appreciated that there may be more or less floatation members provided such that the buoyancy force provided is as described above.

Also located within hollow cavity of casing 140 are weight sin the form of washers 160. A skilled addressee will appreciate that the weights may take a form other than a washer shape.

Whilst, casing 140 of borehole sensing device 100 has a Gömböc shape, the borehole sensing device 100 is formed so that the centre of buoyancy is above the centre of mass such that borehole sensing device 100 is orientated in use such the communications aperture 141 is directed to the month of the borehole within which the borehole sensing device 100 is deployed. As such, a skilled addressee will appreciate that casing 141 may have other shapes that perform this function and/or the components of the borehole sensing device 100 may be arranged in a different manner to the embodiment described to still nevertheless perform this function.

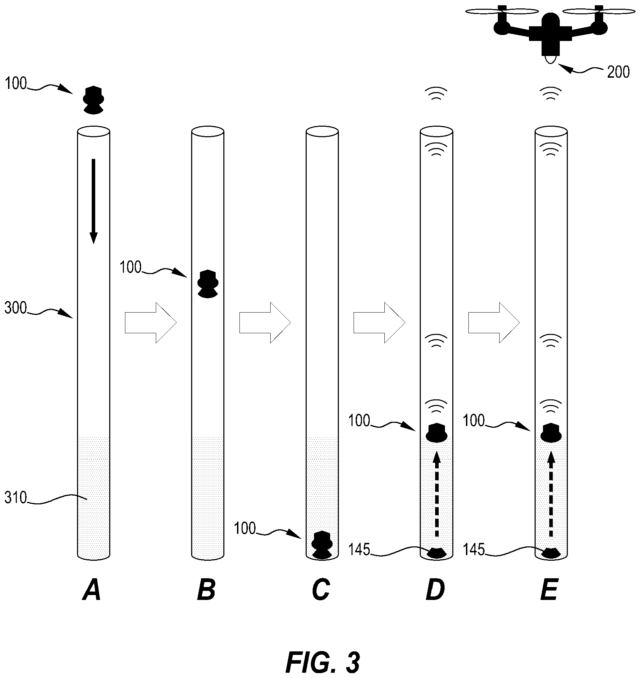

FIGS 3A to 3E show borehole sensing device 100 in use. In use, borehole sensing device 100 is deployable within a borehole 300 and is configured to communicate data associated with conditions of the borehole 300 to receiver module 200. In the embodiment, that data includes the temperature of the borehole, data that is indicative of the presence or absence of any fluid present in the borehole, data associated with the absolute depth of the borehole and, in circumstances where there is fluid present, data associated with the depth of water in the borehole.

As shown in FIGs 3A and 3B, bore hole sensing device is deployed in borehole 300 by dropping the borehole sensing device 100 within borehole 300. Prior to being deployed, the power module 121 of borehole sensing device 100 is activated by a user activating power ignition device 143. AS such, the processing module 120, the sensing module 110 and the communications module 130 are thus powered.

In alternative embodiments, the borehole sensing device 100 may be dropped from a UAV that has a set of location data in the form of GPS co-ordinates representative of the location of a plurality of boreholes and is configured to drop a borehole sensing device in each borehole

The pressure at the mouth of the borehole 300 is, in the preferred embodiment, known and stored in the data store of the receiving device 200. Alternatively, the pressure is measured by the sensing module 110 of the borehole sensing device 100 prior to it being deployed in the borehole 300.

In the example shown, borehole 300 has water 310 located therein. As shown in FIG 3C, due to the sinking force provided by ballast member 145 being greater than the buoyancy force provided by the floatation members 150, the borehole sensing device 100 strikes the water and proceeds to sink to the bottom of the borehole. As the borehole sensing device 100 sinks water enters the hollow cavity created by the casing through water ingress apertures 142 and communications aperture 141. Once borehole processing device 140 reaches the bottom of the borehole 300, sensing module 110 takes a first pressure reading. A skilled addressee will appreciate that the sensing module may make continuous measurements and the first pressure reading will be the reading at which the pressure is the greatest.

In some embodiments, sensing module 110 also takes a temperature reading, a reading to detect the presence or absence of water in the borehole 300 or a further reading related to other conditions of the borehole at this position.

As previously mentioned, cap 146 is formed from a material that is dissolvable in fluid. As such, cap 146 dissolves within the water 310. When cap 310 dissolves, ballast member 145 is no longer retained within blind bore 144 and exits blind bore 144. As borehole sensing device 100 no longer has ballast member 145, the force provided by floatation members 150 causes the borehole sensing device 100 to float to the surface of water 310 as shown in FIG 3D. At this point, sensing module 110 of borehole sensing device 100 takes a second pressure reading.

Optionally, sensing module 110 also takes a temperature reading, moisture reading and/or, in embodiments where modules to sense other borehole characteristics are present, data associated with those other characteristics of the condition of the borehole may also be taken at this stage.

Processing module 120 of borehole sensing device 100 then communicates data associated with the conditions of the borehole 300. In the embodiment, this data includes the first pressure reading and the second pressure reading. As previously discussed, other data may be communicated such as temperature data, moisture data and data uniquely identifying the borehole 300.

In the embodiment, communications module 130 communicates the data associated with the condition of the borehole using the media of audible sound. A suitable communications protocol is used so as the sound carries the data. Such communication may be Morse code, pulse width coding, pulse position coding, frequency shift-keying coding or other such technique or a proprietary protocol to transmit data using sound, or other media. As such, in the embodiment, communications module 130 is in the form of a speaker and emits sound that defines the data associated with conditions of the borehole 300 out of the borehole sensing device 100 through communications aperture 141 and out of borehole 300. That sound is emitted continuous in a loop until power module 121 runs out of power. In some embodiments the sound is emitted at intermittent periods or at predetermined times.

As shown in FIG 3E, receiving device 200 then receives the data communicated by borehole sensing device 100 and processes and stores that data as previously described. The two pressure readings taken by the sensing module 110 from within the borehole 300, together with moisture data, can then be used to calculate the absolute depth of the borehole and the depth of the water in the borehole which is then used by the blast engineer as previously described.

In a preferred form, this calculation is carried out by the receiving unit having received the first pressure reading, the second pressure reading and, optionally, the moisture reading and, having had already known the pressure reading at the mouth of the borehole 300 various depth calculations can occur, as will be well known in the art based on pressure differentials, to determine, the depth of the borehole, the height of the water column if any, within the borehole, the presence of absence of water, etc.

For example, if the first pressure reading is approximately equal to the second pressure reading and the moisture reading indicates that the borehole is dry then the borehole is dry and the depth can be calculated using pressure differential calculations.

If the first pressure reading is approximately equal to the second pressure reading and the moisture reading indicates that the borehole is wet then the borehole is muddy and the depth can be calculated using pressure differential calculations.

If the first pressure reading is greater than the second pressure reading and the moisture reading indicates that the borehole is wet then the borehole is filled with water and the depth of both the hole and the water level can be calculated using pressure differential calculations.

The skilled addressee will appreciate other logic conditions that may be accounted for such as fault detection and the like.

Optionally, the calculation translating the pressure readings to absolute depth of the borehole and depth of water, including its presence or absence in the borehole, may be undertaken at the processing module 120 and then the data associated with conditions in that form is communicated by the borehole sensing device 100 to the receiving device 200.

In the embodiment, the receiving unit 200 is in the form of a UAV but may take other forms as previously described.

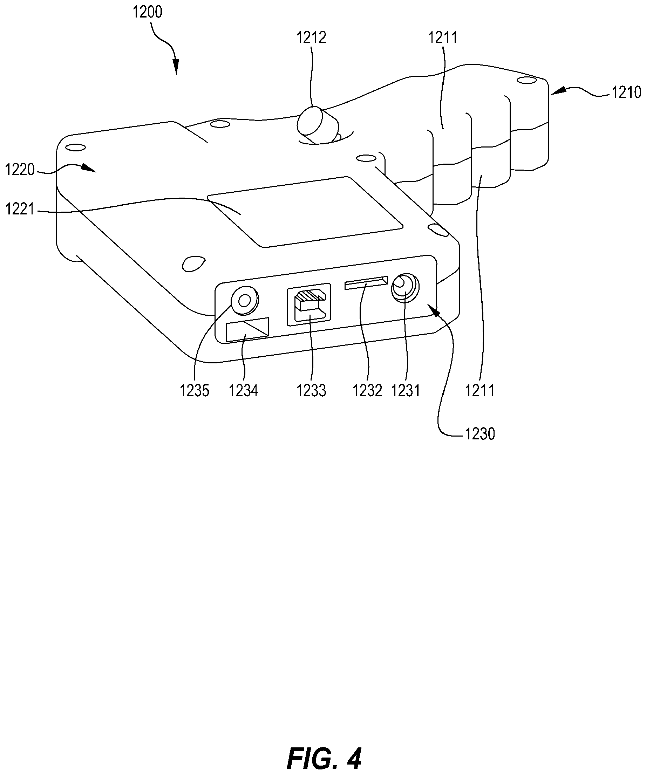

FIG 4 shows a perspective view of a further embodiment of a receiving device 1200 shown in schematic in FIG1 as part of the system for determining borehole conditions.

As in the previous embodiment, receiving device 1200 is adapted to receive data communicated by embodiments of the borehole sensing device 100 and processes, stores and communicates that data as previously described. Receiving device 1200 is a handheld unit and is adapted to be used by a mine worker who travels between the boreholes to receive the data communicated from respective borehole sensing devices 100 located in each.

Receiving device 1200 has a main portion 1220 and handle portion 1210 extending from main portion 1220. Handle portion 1210 has a series of finger grips 1211 and is adapted to nest in the hand of a user. Handle portion 1210 also has a trigger device 1212 adapted to be activated by the user to commence data reception, complete data reception or to determine whether data is to be communicated.

In the embodiment shown, receiving module 1230 has a microphone 1231 adapted to receive the audible signal that communicates the conditions of the borehole transmitted by the communications module 130 of the borehole sensing device 100. Receiving module also includes one or more communications modules which, in the embodiment, are an SD card reader 1232, WIFI transmitter and receiver 1235, SD card reader 1234 all of which are in communication with a processing module 220 (not shown in the embodiment) and data store 230 (not shown in the embodiment) of the receiving device 1200.

A skilled addressee will appreciate that other communication and storage interfaces may be located on receiving module in communication with processing module and data storage such as ethernet, Bluetooth, GPS receiver, serial comport and the like.

Receiving module 1233 also comprises a power source 1233 for supplying power and/or recharging batteries to supply power to the various components of the receiving device 1200.

Main portion 1220 has a display module 1221 in the form of a screen and a receiving module 1230. Display module 1221 provides feedback to the user of the receiving device an is able to provide visual indication of the conditions of the borehole, when data has been received and transmission is complete, when a signal carrying conditions of a borehole has been communicated and the like.

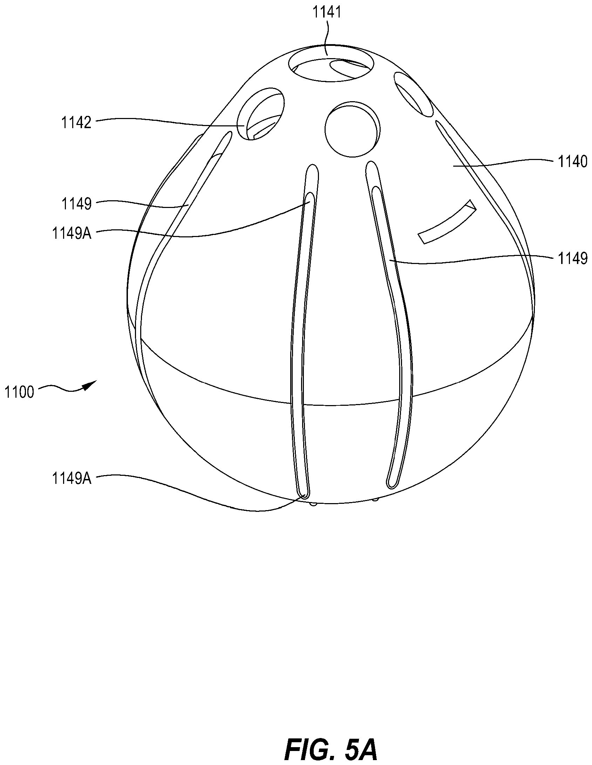

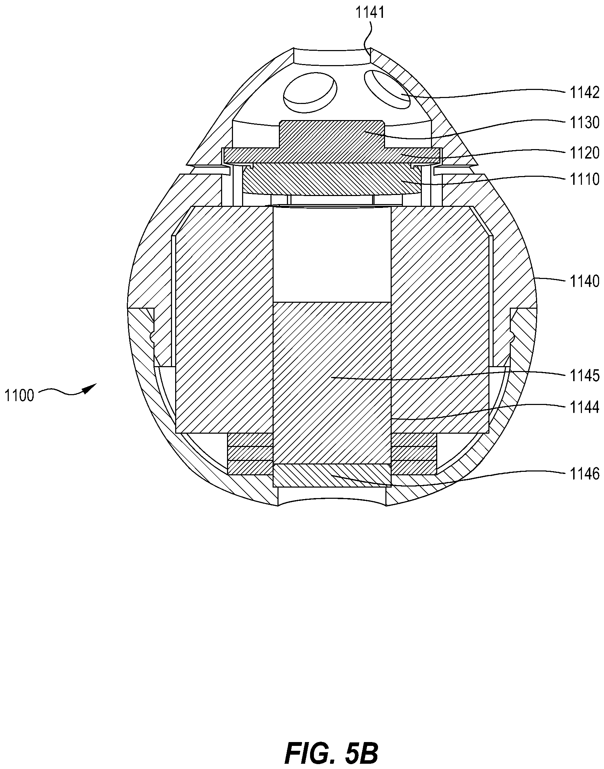

FIG 5A shows a perspective view of a further embodiment of a borehole sensing device 1100 shown in schematic in FIG1 as part of the system 1000 for determining borehole conditions. FIG 5B shows a sectional side view of the borehole sensing device 1100 shown in FIG 5A.

As in earlier embodiments, borehole sensing device 1100 is adapted to be deployed within a borehole and has a sensing module 1110, a processing module 1120 and a communications module located within a hollow cavity of casing 1140.

Casing 1140 has a communications aperture 1141 extending from an outer side of casing 1140 into hollow cavity. Casing 1140 also has a number of fluid ingress apertures 1142 extending from an outerside of casing 1140 to within hollow cavity to allow ingress of water into cavity.

A blind bore 1144 is located at an end of borehole sensing device 100 distal to the communications aperture 1141. Blind bore 1144 extends within casing 1141 as shown and has located therein a ballast member 1145. Optionally, blind bore 1144 may also include apertures extending therethrough in hollow cavity to allow ingress of water and egress of gas.

A cap 1146 releasably retains ballast member 1145 within blind bore 1144. Cap 1146 is formed from a material such as citric acid, bicarbonate soda, sugar or the like or combinations thereof that is dissolvable in fluid at a predictable rate. Alternatively, cap may be secured to casing by a binding agent that is dissolvable in a fluid. The cap and ballast member function as previously described.

Whilst remaining unlabelled for clarity reasons, borehole sensing device 1100 has other features as described with reference to bore sensing device 100 as described in FIGS 2A to 2E.

Borehole sensing device 1100 has a series of grooves 1149 located in an outerface of casing 1140. Each groove 1140 extend longitudinally from proximal communications aperture 1141 and terminate proximal blind bore 1144 and have at each terminal end an aperture 1149A extending from an outer face to an inner face of casing 1140.

The grooves 1140 extend longitudinally at spaced circumferential intervals about casing 1140.

As before, sensing module 1110 of borehole sensing device 1100 has a pressure sensor adapted to read pressure as previously described. In the embodiment shown in FIGs 5A and 5B, sensing module 1110 further comprises a moisture sensor in the form of a conductive member 1111 located within each groove and extending through casing 1140 and in communication with processing module 1120.

When the borehole sensing device 1100 is located in the presence of moisture at the bottom of a borehole, the conductive members conduct electricity and thereby communicate to processing module 1120 the presence of that moisture for processing as previously discussed.

The grooves and the conductive members are arranged such that faces of the casing are suitably covered so as to determine absence of moisture regardless of the orientation of the borehole sensing device 1100 in the borehole.

A skilled addressee will appreciate that other arrangements and mechanisms may be used to detect and communicate the presence or absence of moisture and those may equally be implemented in the borehole sensing device of the invention.

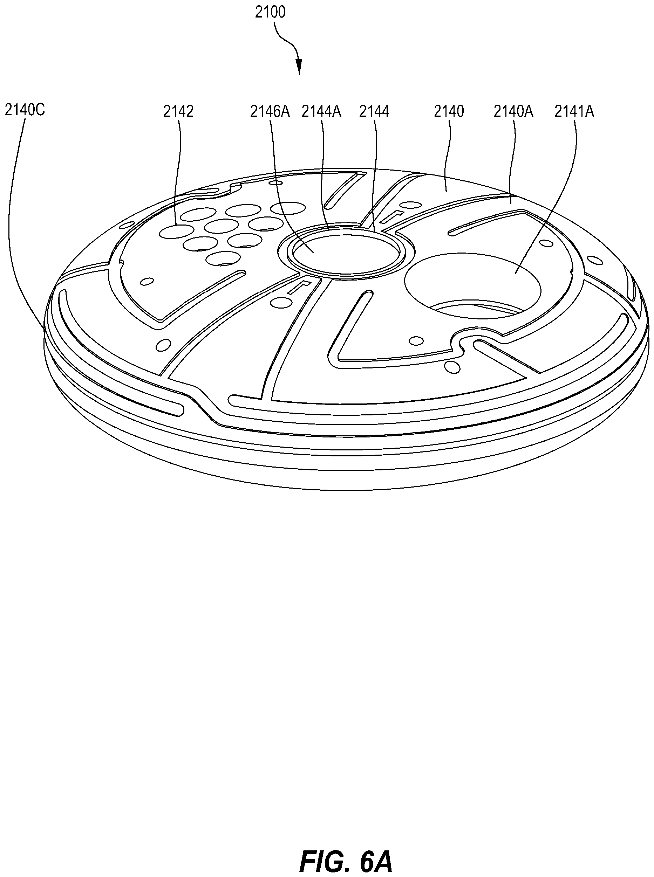

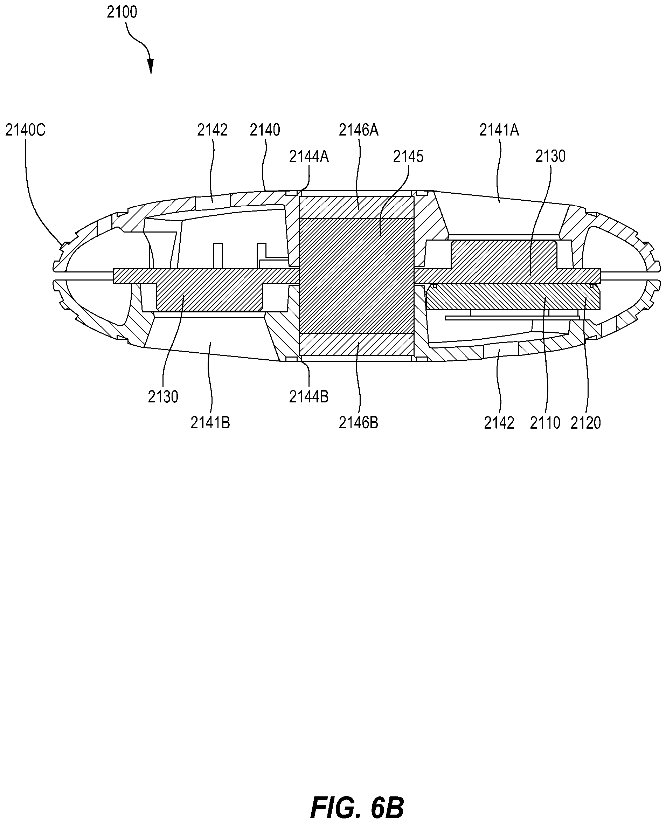

FIG 6A shows a perspective view of still a further embodiment of a borehole sensing device 2100 shown in schematic in FIG1 as part of the system 1000 for determining borehole conditions. FIG 6B shows a sectional side view of the borehole sensing device 2100 shown in FIG 6A.

As in earlier embodiments, borehole sensing device 2100 is adapted to be deployed within a borehole and has a sensing module 2110, a processing module 2120 and a communications module 2130 located within a hollow cavity of casing 2140.

Unlike previous embodiments, casing 2140 has a disc shape formed from opposing upper surface 2140A and lower surfaces 2140B separated by a circumferentially extending edge surface 2140C. In the embodiment, the upper and lower surfaces 2140A and 2104B have a generally circular shape when each is viewed in plan.

The shape of the casing 2140 advantageously allows for greater control over the orientation of the sensing device 2100 once deployed within a borehole. Due to the particular aerodynamic nature of the shape there is a very high likelihood that the borehole sensing device will land and come to rest with either the upper surface or lower surface being orientated to face the mouth of the borehole.

Furthermore, the shape will cause the device to have lift and drag both slowing its descent down the borehole and also bringing it in contact with the walls of the borehole to further slow descent and to thereby minimising impact related damages at the bottom of the borehole. Preferably, circumferentially extending edge surface 2140C acts to dampen impacts.

A skilled addressee will appreciate that other shaped casing will have similar desirable affects providing that the shape has a high aspect ratio with respect to the thickness of the casing such as oblong shaped casings and the like.

As a consequence of the prospect of borehole sensing device 2100 being locatable such that either upper face 2140A or 2140B may be orientated to face the mouth of the borehole, there is a communication aperture 2141A extending through upper face 2140A and also a communication aperture 2141B extending through lower face casing 2140B with each proximal communications module 2130. It will be appreciated that this is necessary in order that data associated with conditions of a borehole may be accurately transmitted from communications module 2130 to receiving device. Optionally, borehole sensing device 2100 includes an orientation sensor so that determination of the orientation of the borehole sensing device 2100 may be made.

Furthermore, casing 2140 has a single central bore 2144 extending therethrough. Central bore 2144 has an opening 2144A on upper face 2140A and an opening 2144B in a lower face 2140B. A cap 2146A is captively located in central bore 2144 proximal opening 2144A and a cap 2146B is captively located within central bore 2144 proximal opening 2144B.

A ballast member is located within central bore 2144 between cap 2146A and cap 2146B. As before, each cap is dissolvable in water and ballast member is able to exit central bore through which ever cap is dissolved to function as previously described.

A skilled addressee will appreciate that other arrangements and mechanisms may be used to detect and communicate the presence or absence of moisture and those may equally be implemented in the borehole sensing device of the invention.

There are grooves and conductive members suitably located about casing which function as before to detect moisture.

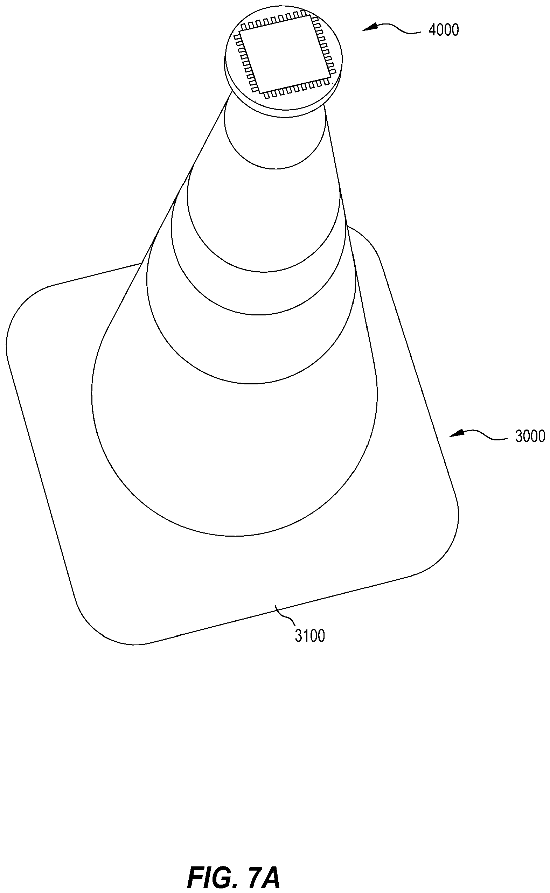

FIG 7A shows a perspective view of a repeater device 4000 located on amplification member 3000 forming part of a further embodiment of the system 1000 for determining borehole conditions.

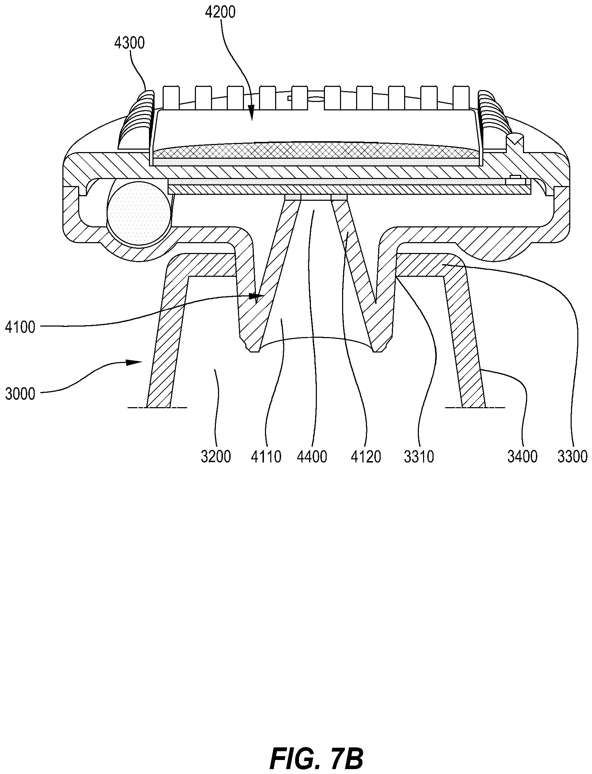

FIG 7B shows a partial sectional view the repeater device 4000 and the amplification member 3000 shown in FIG 7A.

Amplification member 3000 is adapted to be located upon and cover the mouth of borehole 300 (not shown) and acts to amplify a signal communicated from the borehole sensing device carrying the data associated with conditions of the borehole.

As such, amplification device has a base 3100 and a sidewall 3400 terminating at a topwall 3300. Base has an opening (not shown) such that a cavity 3200 is formed within by the sidewall 3400 and the top wall 3300 that opens at the bottom end of the amplification device.

In the embodiment, the sidewall is conical in shape thus forming a conical cavity. There is an opening 3310 in top wall 3300. The amplification member acts to amplify audible signals and also prevent ingress of debris and water to within a borehole 300.

Repeater device 4000 located upon top wall 3300 of amplification member. Repeater device 4000 has mounting portion 4100 which penetrates opening 3310. Mounting portion 4100 has a conical side wall 4120 open at a lower end forming a conical cavity 4110.

A receiving device 4400 in the form of a microphone is located at the top of cavity 4110 and is adapted to receive signals from the borehole sensing device in the borehole.

Repeater device 4000 has a transmitting device 4200 in the form of a speaker located on an upper surface and is adapted to retransmit the signal received by receiver device 4400.

A series of indication devices 4300 are also located on upper surface. These suitably take the form of lights to indicate, for example, when signals are received and also to suitable indicate certain conditions of the borehole 300 such as temperature and the presence or absence of water. The systems, methods and devices of the invention provide for a low cost, autonomous and accurate process to identify certain conditions of a borehole such that the amount of explosive to be loaded in each blast hole can be accurately determined.

The above description of various embodiment of the present invention is provided for purposes of description to one of ordinary skill in the related art. It is not intended to be exhaustive or to limit the invention to a single disclosed embodiment.

Embodiments of the borehole sensing device of the invention may further comprise a water-soluble coating located on an outer surface of the casing. That water-soluble coating may be in the form of gelatine or a different form of dissolvable coating including effervescent chemical material or other soluble organic or inorganic coating. The water-soluble coating located on the external surface of the casing is especially advantageous when the borehole sensing device is being deployed in boreholes that are especially muddy and/or filled with water. In such circumstances, the impact of the borehole sensing device as it reaches the bottom of the borehole may be of sufficient force that the device may become embedded in mud and underwater. The suction force of the mud and the impact may be such that the device is unable to break free and float to the surface of the water even after the ballast has been deployed. The water-soluble coating acts to allow water to penetrate along the interface between the coating and the outer surface of the casing to thereby breach the suction force. Advantageously, the coating also allows fluid to leach into the plug and allow the ballast to release.

In this specification, the terms 'comprises', 'comprising', 'includes', 'including', or similar terms are intended to mean a non-exclusive inclusion, such that a method, system or apparatus that comprises a list of elements does not include those elements solely, but may well include other elements not listed.

## Claims

1. A borehole sensing device (100, 1100, 2100) for logging the depth of a borehole (300) and determining the presence or absence of water (310) therein prior to explosives being loaded into that borehole (300), the borehole sensing device (100, 1100, 2100) being adapted to be deployed within the borehole (300), the device (100, 1100, 2100) comprising:
a sensing module (110, 1110, 2110) adapted to sense conditions of the borehole (300), which includes a pressure sensor configured to:
take three pressure readings at the mouth of the borehole (300), at the bottom of the borehole (300) under a body of water (310), if any, and at the surface of the body of water (310);
determine the depth of the borehole (300) by determining the pressure differential between the mouth of the borehole (300) and the surface of the body of water (310) in the borehole (300) to thereby determine the distance between those two points; and
determine the absolute depth of the borehole (300) by determining the pressure differential between the surface of the body of water (310) and the bottom of the borehole (300) to thereby calculate the depth of the body of water (310) and the absolute depth of the borehole (300);
a processing module (120, 1120, 2120) in communication with the sensing module (110, 1110, 2110), the processing module (120, 1120, 2120) adapted to receive data associated with the conditions of the borehole (300) from the sensor module; and
a communications module (130, 1130, 2130) adapted to communicate out of the borehole (300) the data associated with the conditions of the borehole (300), wherein the communications module (130, 1130, 2130) is a speaker and the data associated with conditions of the borehole (300) is communicated by way of audio transmission.

2. The borehole sensing device (100, 1100, 2100) according to claim 1, wherein the data associated with the conditions of the borehole communicated out of the borehole (300) by the communications module (130, 1130, 2130) includes the absolute depth of the borehole (300) and the height of any body of water (310) in the borehole (300).

3. The borehole sensing device of claim 1, wherein the sensing device includes a moisture sensor adapted to detect the presence of moisture in the borehole (300), the moisture data forming part of the data associated with the borehole (300).

4. The borehole sensing device of claim 1, wherein the borehole sensing device is adapted to initially sink in any fluid located in the borehole (300) to thereby travel to the bottom of the borehole (300).

5. The borehole sensing device of claim 4, wherein the borehole sensing device is adapted to subsequently float to the surface of a body of water (310) located in the bottom of the borehole (300).

6. The borehole sensing device of claim 1 further comprising a ballast member captively retained within a casing of the borehole sensing device by a cap dissolvable in fluid.

7. The borehole sensing device of claim 6, wherein the ballast member exits the casing of the borehole sensing device in circumstances where the cap dissolves in fluid.

8. The borehole sensing device of claim 1 further comprising a casing (140, 1140, 2140) having a hollow cavity, the sensing module (110, 1110, 2110), the processing module (120, 1120, 2120) and the communications module (130, 1130, 2130) being located within the hollow cavity of the casing (140, 1140, 2140).

9. The borehole sensing device of claim 8 wherein the casing (140, 1140, 2140) is of a shape that has physical characteristics that provide for a particular orientation of the borehole sensing device once it has been deployed within the borehole (300).

10. The borehole sensing device of claim 9 wherein the casing (140, 1140, 2140) is of a Gömböc shape, a coin shape, a disc shape or a shape that has a high aspect ratio with respect to a width of the casing (140, 1140, 2140).

## Patentansprüche

1. Bohrlocherfassungsvorrichtung (100, 1100, 2100) zum Protokollieren der Tiefe eines Bohrlochs (300) und Bestimmen des Vorhandenseins oder Nichtvorhandenseins von Wasser (310) darin, bevor Sprengstoffe in das Bohrloch (300) geladen werden, wobei die Bohrlocherfassungsvorrichtung (100, 1100, 2100) dazu ausgelegt ist, innerhalb des Bohrlochs (300) ausgefahren zu werden, wobei die Vorrichtung (100, 1100, 2100) Folgendes umfasst:
ein Erfassungsmodul (110, 1110, 2110), das dazu ausgelegt ist, Bedingungen des Bohrlochs (300) zu erfassen, das einen Drucksensor beinhaltet, der zu Folgendem ausgelegt ist:
Vornehmen von drei Druckmessungen an der Mündung des Bohrlochs (300), am Boden des Bohrlochs (300) unter einem Gewässer (310), falls vorhanden, und an der Oberfläche des Gewässers (310);
Bestimmen der Tiefe des Bohrlochs (300) durch Bestimmen der Druckdifferenz zwischen der Mündung des Bohrlochs (300) und der Oberfläche des Gewässers (310) in dem Bohrloch (300), um dadurch den Abstand zwischen diesen beiden Punkten zu bestimmen; und
Bestimmen der absoluten Tiefe des Bohrlochs (300) durch Bestimmen der Druckdifferenz zwischen der Oberfläche des Gewässers (310) und dem Boden des Bohrlochs (300), um dadurch die Tiefe des Gewässers (310) und die absolute Tiefe des Bohrlochs (300) zu berechnen;
ein Verarbeitungsmodul (120, 1120, 2120) in Kommunikation mit dem Erfassungsmodul (110, 1110, 2110), wobei das Verarbeitungsmodul (120, 1120, 2120) dazu ausgelegt ist, mit den Bedingungen des Bohrlochs (300) assoziierte Daten von dem Sensormodul zu empfangen; und
ein Kommunikationsmodul (130, 1130, 2130), das dazu ausgelegt ist, die mit den Bedingungen des Bohrlochs (300) assoziierten Daten aus dem Bohrloch (300) heraus zu kommunizieren, wobei das Kommunikationsmodul (130, 1130, 2130) ein Lautsprecher ist und die mit den Bedingungen des Bohrlochs (300) assoziierten Daten über eine Audioübertragung kommuniziert werden.

2. Bohrlocherfassungsvorrichtung (100, 1100, 2100) nach Anspruch 1, wobei die mit den Bedingungen des Bohrlochs assoziierten Daten, die durch das Kommunikationsmodul (130, 1130, 2130) aus dem Bohrloch (300) heraus kommuniziert werden, die absolute Tiefe des Bohrlochs (300) und die Höhe jedes Gewässers (310) in dem Bohrloch (300) beinhalten.

3. Bohrlocherfassungsvorrichtung nach Anspruch 1, wobei die Erfassungsvorrichtung einen Feuchtigkeitssensor beinhaltet, der dazu ausgelegt ist, das Vorhandensein von Feuchtigkeit in dem Bohrloch (300) zu detektieren, wobei die Feuchtigkeitsdaten einen Teil der mit dem Bohrloch (300) assoziierten Daten bilden.

4. Bohrlocherfassungsvorrichtung nach Anspruch 1, wobei die Bohrlocherfassungsvorrichtung dazu ausgelegt ist, anfänglich in jedes in dem Bohrloch (300) befindliche Fluid einzusinken, um sich dadurch zum Boden des Bohrlochs (300) zu bewegen.

5. Bohrlocherfassungsvorrichtung nach Anspruch 4, wobei die Bohrlocherfassungsvorrichtung dazu ausgelegt ist, anschließend an die Oberfläche eines Gewässers (310) zu schwimmen, das sich im Boden des Bohrlochs (300) befindet.

6. Bohrlocherfassungsvorrichtung nach Anspruch 1, ferner umfassend ein Ballastelement, das durch eine in Fluid lösliche Kappe unverlierbar in einem Futterrohr der Bohrlocherfassungsvorrichtung gehalten ist.

7. Bohrlocherfassungsvorrichtung nach Anspruch 6, wobei das Ballastelement das Futterrohr der Bohrlocherfassungsvorrichtung unter Umständen verlässt, in denen sich die Kappe in Fluid auflöst.

8. Bohrlocherfassungsvorrichtung nach Anspruch 1, ferner umfassend ein Futterrohr (140, 1140, 2140) mit einem Hohlraum, wobei sich das Erfassungsmodul (110, 1110, 2110), das Verarbeitungsmodul (120, 1120, 2120) und das Kommunikationsmodul (130, 1130, 2130) innerhalb des Hohlraums des Futterrohrs (140, 1140, 2140) befinden.

9. Bohrlocherfassungsvorrichtung nach Anspruch 8, wobei das Futterrohr (140, 1140, 2140) eine Form aufweist, die physikalische Eigenschaften aufweist, die eine bestimmte Ausrichtung der Bohrlocherfassungsvorrichtung bereitstellen, sobald sie innerhalb des Bohrlochs (300) ausgefahren wurde.

10. Bohrlocherfassungsvorrichtung nach Anspruch 9, wobei das Futterrohr (140, 1140, 2140) eine Gömböc-Form, eine Münzform, eine Scheibenform oder eine Form aufweist, die ein hohes Aspektverhältnis in Bezug auf eine Breite des Futterrohrs (140, 1140, 2140) aufweist.

## Revendications

1. Dispositif de détection pour trou de forage (100, 1100, 2100) destiné à enregistrer la profondeur d'un trou de forage (300) et à déterminer de l'eau (310) est présente ou absente dans celui-ci avant que des explosifs soit chargés dans ce trou de forage (300), le dispositif de détection pour trou de forage (100, 1100, 2100) étant adapté pour être déployé à l'intérieur du trou de forage (300), le dispositif (100, 1100, 2100) comprenant :
un module de détection (110, 1110, 2110) adapté pour détecter des conditions du trou de forage (300), qui inclut un capteur de pression configuré pour :
effectuer trois mesures de pression à l'embouchure du trou de forage (300), au fond du trou de forage (300) sous un corps d'eau (310), s'il existe, et à la surface du corps d'eau (310) ;
déterminer la profondeur du trou de forage (300) en déterminant la pression différentielle entre l'embouchure du trou de forage (300) et la surface du corps d'eau (310) dans le trou de forage (300) pour ainsi déterminer la distance entre ces deux points ; et
déterminer la profondeur absolue du trou de forage (300) en déterminant la pression différentielle entre la surface du corps d'eau (310) et le fond du trou de forage (300) pour ainsi calculer la profondeur du corps d'eau (310) et la profondeur absolue du trou de forage (300) ;
un module de traitement (120, 1120, 2120) en communication avec le module de détection (110, 1110, 2110), le module de traitement (120, 1120, 2120) étant adapté pour recevoir des données associées aux conditions du trou de forage (300) en provenance du module de détection ; et
un module de communication (130, 1130, 2130) adapté pour communiquer, en dehors du trou de forage (300), les données associées aux conditions du trou de forage (300), dans lequel le module de communication (130, 1130, 2130) est un haut-parleur et les données associées à des conditions du trou de forage (300) sont communiquées par l'intermédiaire de transmission audio.

2. Dispositif de détection pour trou de forage (100, 1100, 2100) selon la revendication 1, dans lequel les données associées aux conditions du trou de forage communiquées en dehors du trou de forage (300) par le module de communication (130, 1130, 2130) incluent la profondeur absolue du trou de forage (300) et la hauteur de tout corps d'eau (310) dans le trou de forage (300).

3. Dispositif de détection pour trou de forage de la revendication 1, dans lequel le dispositif de détection inclut un capteur d'humidité adapté pour détecter la présence d'humidité dans le trou de forage (300), les données d'humidité faisant partie des données associées au trou de forage (300).

4. Dispositif de détection pour trou de forage de la revendication 1, dans lequel le dispositif de détection pour trou de forage est adapté pour initialement couler dans tout fluide situé dans le trou de forage (300) pour ainsi se déplacer jusqu'au fond du trou de forage (300).

5. Dispositif de détection pour trou de forage de la revendication 4, dans lequel le dispositif de détection pour trou de forage est adapté pour ensuite flotter jusqu'à la surface d'un corps d'eau (310) situé dans le fond du trou de forage (300).

6. Dispositif de détection pour trou de forage de la revendication 1, comprenant en outre un élément de ballastage retenu de façon captive à l'intérieur d'un tubage du dispositif de détection pour trou de forage par un bouchon pouvant être dissous dans un fluide.

7. Dispositif de détection pour trou de forage de la revendication 6, dans lequel l'élément de ballastage sort du tubage du dispositif de détection pour trou de forage dans des circonstances où le bouchon se dissout dans un fluide.

8. Dispositif de détection pour trou de forage de la revendication 1, comprenant en outre un tubage (140, 1140, 2140) ayant une cavité creuse, le module de détection (110, 1110, 2110), le module de traitement (120, 1120, 2120), et le module de communication (130, 1130, 2130) étant situés à l'intérieur de la cavité creuse du tubage (140, 1140, 2140) .

9. Dispositif de détection pour trou de forage de la revendication 8, dans lequel le tubage (140, 1140, 2140) est d'une forme qui a des caractéristiques physiques qui permettent une orientation particulière du dispositif de détection pour trou de forage une fois qu'il a été déployé à l'intérieur du trou de forage (300).

10. Dispositif de détection pour trou de forage de la revendication 9, dans lequel le tubage (140, 1140, 2140) est d'une forme de Gömböc, une forme de pièce de monnaie, une forme de disque ou une forme qui a un rapport d'aspect élevé en ce qui concerne une largeur du tubage (140, 1140, 2140).
